# EUROPEAN PATENT SPECIFICATION

(11) **EP 0 827 905 B1**
(45) Date of publication and mention of the grant of the patent: **21.05.2003**
(21) Application number: 97500141.3
(22) Date of filing: 20.08.1997
(51) Int. Cl.: B64C 30/00

(54) **Improvement to aircraft and high speed vehicles**
Verbesserungen an Flugzeugen und Hochgeschwindigkeitsfahrzeugen
Perfectionement en avions et véhicules à grande vitesse

(30) Priority: 06.09.1996 ES 9601904; 07.08.1997 ES 9701753
(43) Date of publication of application: 11.03.1998
(73) Proprietor: Munoz Saiz, Manuel, 04004 Almeria (ES)
(72) Inventor: Munoz Saiz, Manuel, 04004 Almeria (ES)

(56) References cited:
- US-A- 3 310 262
- US-A- 3 955 781
- US-A- 4 828 204
- MARY KAE LOCKWOOD O'NEILL ET AL: "DESIGN TRADEOFFS ON SCRAMJET ENGINE INTEGRATED HYPERSONIC WAVERIDERVEHICLES" JOURNAL OF AIRCRAFT, vol. 30, no. 6, 1 November 1993, pages 943-952, XP000414320
- RAINEY S M ET AL: "COMPUTER MODELING AND COMPARISON OF HYDROGEN-FUELED AND METHANE-FUELED HYPERSONIC VEHICLES" INTERNATIONAL JOURNAL OF HYDROGEN ENERGY, vol. 17, no. 1, 1 January 1992, pages 53-61, XP000259380

## Description

### BACKGROUND OF THE INVENTION

### Field of the invention

High speed vehicle fuselages

### State of the Prior Art

Existing high-speed vehicle fuselages have a front and/or rear layout in some cases which is conical or similar to deflect the air radially while, in other cases, they pressure the vehicle into the ground without any way taking advantage of slipstream energy.

### BRIEF DESCRIPTION OF THE INVENTION

The improvement to aircraft or high-speed vehicles in this invention comprises an elongated uniform fuselage with a flattened rectangular, oval or circular transverse cross-section, to take a form whose side view is a rhomboid with the longer sides horizontal and in which the inclined flat frontal surface is a ramp beginning in front at the top, dropping along and inclined backward until meeting the base, the inclined surface of the tail is parallel to the front surface, that is, with the rear surface beginning at the top, dropping along and inclined backward until meeting the base, having the unions between the other, non-lateral, surfaces suitably rounded.

The fuselage can in any case be slightly curved, convex, lengthwise and upward to take a wing-like profile, with its respective lift, particularly on the flattened rectangular transverse section.

The nose of the rectangular fuselage may have two sweep-back sides which slope backward and downward to the central longitudinal vertical plane, like the prow of a boat, this design is reversed for the tail.

The landing gear may be set backward, or the tail may be tiltable to allow rotation during take-off and landing, otherwise, for these manoeuvres, nose-up inclination is reduced, or can be used slots or means to blow or suck in, to protect the boundary layer. For this the nose may be also tiltable.

These systems may be applied separatedly to the nose or tail, in which case the correction required with the stabiliser are greater.

The tendency for the fuselage to take a direction in relation to the flight air current with, for example, the diagonal or maximum plane of the rhomboid according to its side view, is corrected with the stabiliser, in the same way as it is corrected at present the tendency of wings to take a direction at a zero angle of minimum resistance to advance in relation to the air current.

The system in the invention is not to be found in fish, water drops, etc., since there is no energy use in the creation of the lift, which is required in aircraft and birds, thought not in dirigibles.

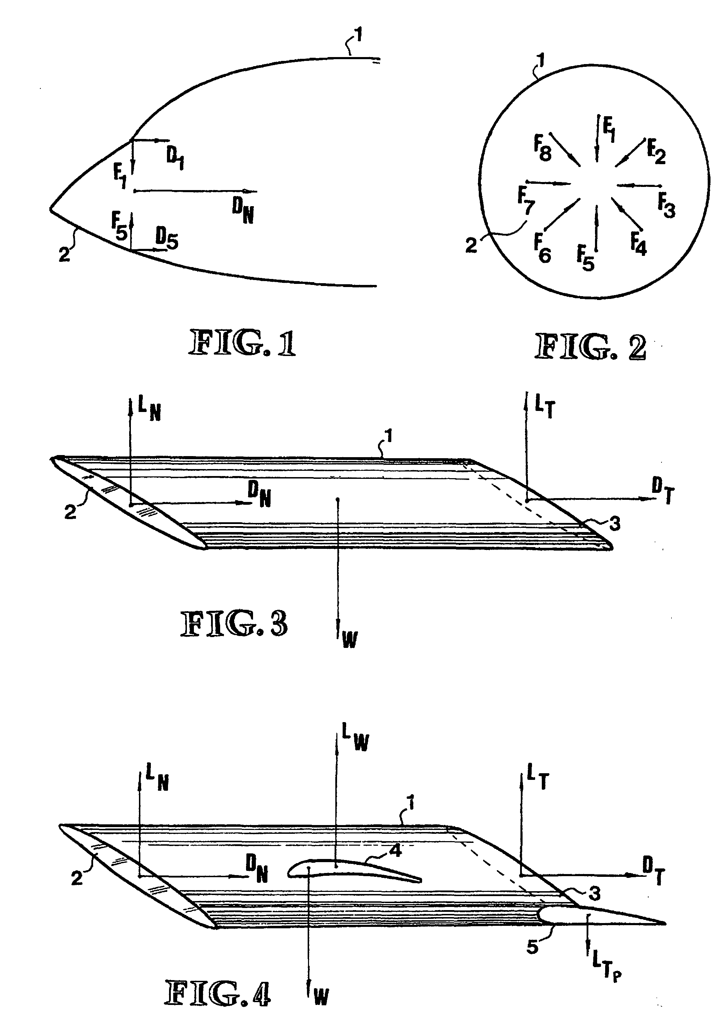

The best eficiency of this system is got with the vehicles shown in figures 3, 4, 7, 8 and 11.

Frontal inclined upward wall exploits the frontal incident air to create major lift and, because of the angle which it forms, frontal resistance is the same as that of a conventional vehicle fuselage

Rear inclined downward wall exploit the suction of the rear air to create major lift and, because of its angle, the tail resistance is the same as that of a conventional vehicle.

The flat part of the invention may be slightly curved, convex, both on the nose and tail.

A variant makes use at the nose and tail of two oblique pyramid forms linked around their base to the vehicle fuselage and inclined so that the apothem or edge of the upper surface of the pyramid is in line with and forms a continuation of the upper longitudinal axis of the vehicle fuselage.

A further variant has two oblique cone forms, at the nose and tail, linked around their bases to the vehicle fuselage and inclined so that the upper generatrix of the cone is in line with and forms a continuation of the upper longitudinal axis of the vehicle fuselage.

The connection between these inclined surfaces, pyramids or cones and the fuselage is smooth, with edges or sharp angles rounded.

Said nose and/or tail inclinations are useful in aircraft and mono-rail trains which do not require pressure into the ground or track.

The angle of inclination can be calculated according to the vehicle and the standard or cruising of the vehicle so that the weight in the area is equal to the lift at said cruising speed, with the need to counteract the weight at low speed with fins or, in the case of trains, simply with the wheels.

With aircraft, the moments generated by the forces both statically and dynamically ought to tend to stabilise themselves. This is possible in part because the resulting forces at the nose and tail are counteracted by the generation of opposing moments in relation to the center of gravity or the points of application of that resulting from the lift.

The control cab can be installed at any point on the inclined surface, ramp or on the lower generatrix of the frontal cone.

### BRIEF DESCRIPTION OF THE DRAWINGS

Figure 1 shows a side view of the nose of an aircraft, with the aerodynamic forces and resistances acting on a portion of the upper and lower zone, and the total resistance it causes.

Figure 2 is a frontal view of the nose of an aircraft, with the radial forces generated there.

Figure 3 shows a diagrammed side view of a monorail train with the arrangement of this invention.

Figure 4 shows a diagrammed side view of an aircraft with the arrangement of this invention.

Figures 5 and 6 show diagrammed side views of two high-speed vehicles.

Figures 7 to 9 and 11 show perspective diagrammed side views of aircrafts, variants of the invention.

Figures 10 and 12 show diagrammed side views of aircrafts, variants of the invention.

### MORE DETAILED DESCRIPTION OF THE DRAWINGS

Figure 1 consists of the fuselage 1, the nose 2, the upper and lower partial forces perpendicular to the longitudinal axis F₁ and F₅, their partial drag D₁ and D₅ in which the incidental ram air forces are splitted, where the total frontal drag is D_{N}.

Figure 2 consists of the fuselage 1, the nose 2, the radial or perpendicular to the longitudinal axis forces F₁ to F₈, opposite among them and which are wasted.

Figure 3 consists of the fuselage 1, the nose 2, the tail 3, the nose lift LN, the nose drag D_{N}, the tail lift L_{T}, the tail drag D_{T} and the train weight W.

Figure 4 consists of the fuselage 1, the nose 2, the tail 3, the wing 4, the stabiliser and elevator 5, the nose lift L_{N}, the nose drag D_{N}, the tail lift L_{T}, the tail drag D_{T} and the stabiliser and elevator lift L_{TP}, the wing lift L_{W} and the aircraft weight W.

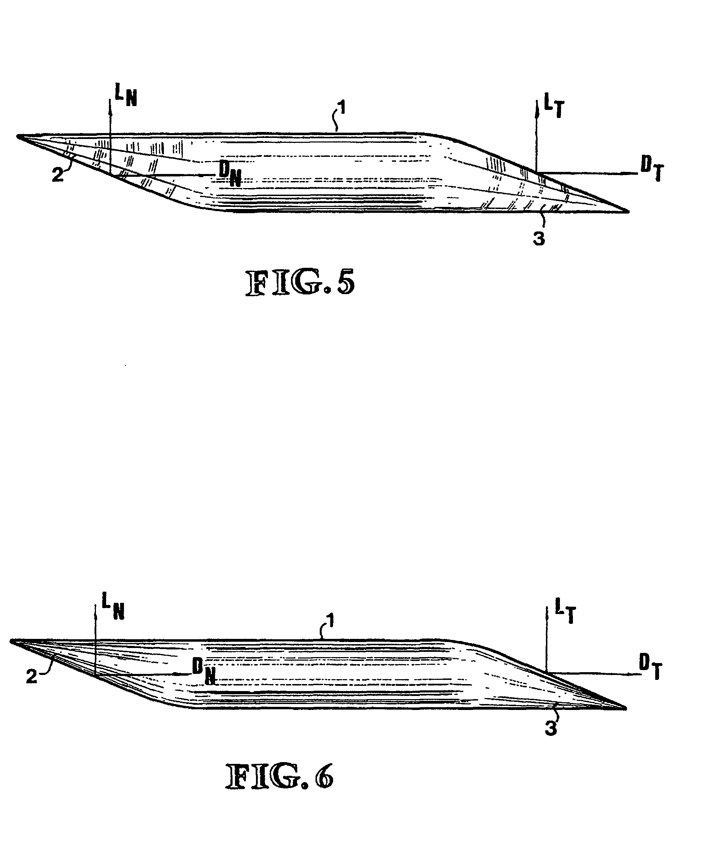

Figure 5 consists of the fuselage 1, the pyramidal nose 2, the tail 3, the nose lift L_{N}, the nose drag D_{N}, the tail lift L_{T} and the tail drag D_{T}.

Figure 6 consists of the fuselage 1, the conical nose 2, the tail 3, the nose lift L_{N}, the nose drag D_{N}, the tail lift L_{T} and the tail drag D_{T}.

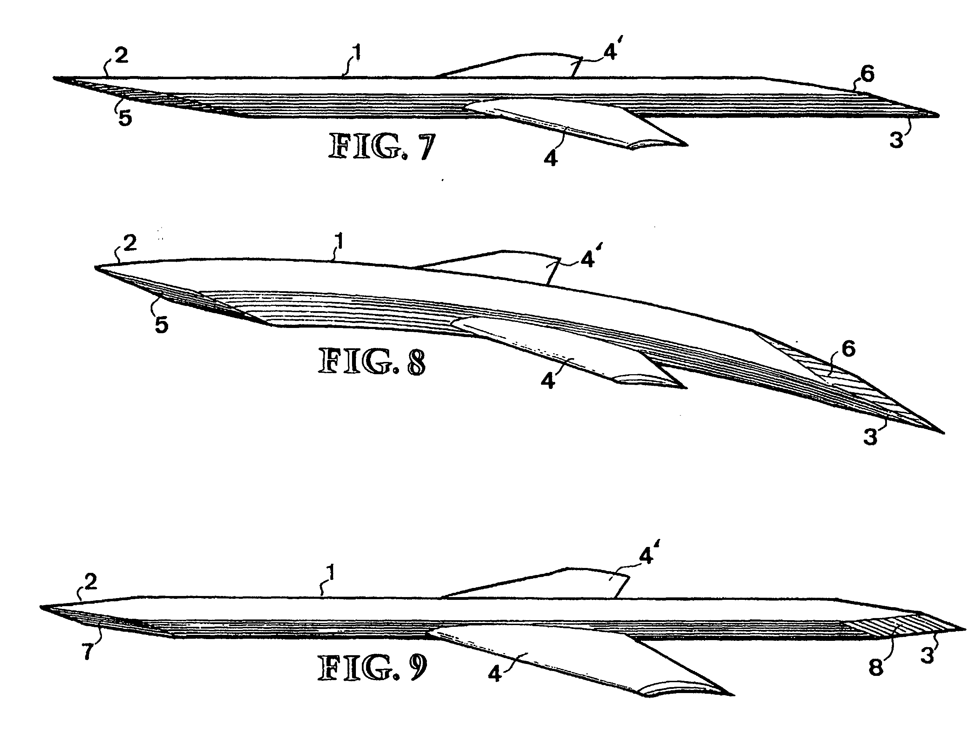

Figure 7 consists of the fuselage 1, the nose 2, the tail 3, the wings 4 and 4', the inclined frontal surface 5 and the inclined rear surface 6.

Figure 8 consists of the fuselage 1, the nose 2, the tail 3, the wings 4 and 4', the inclined frontal surface 5 and the inclined rear surface 6.

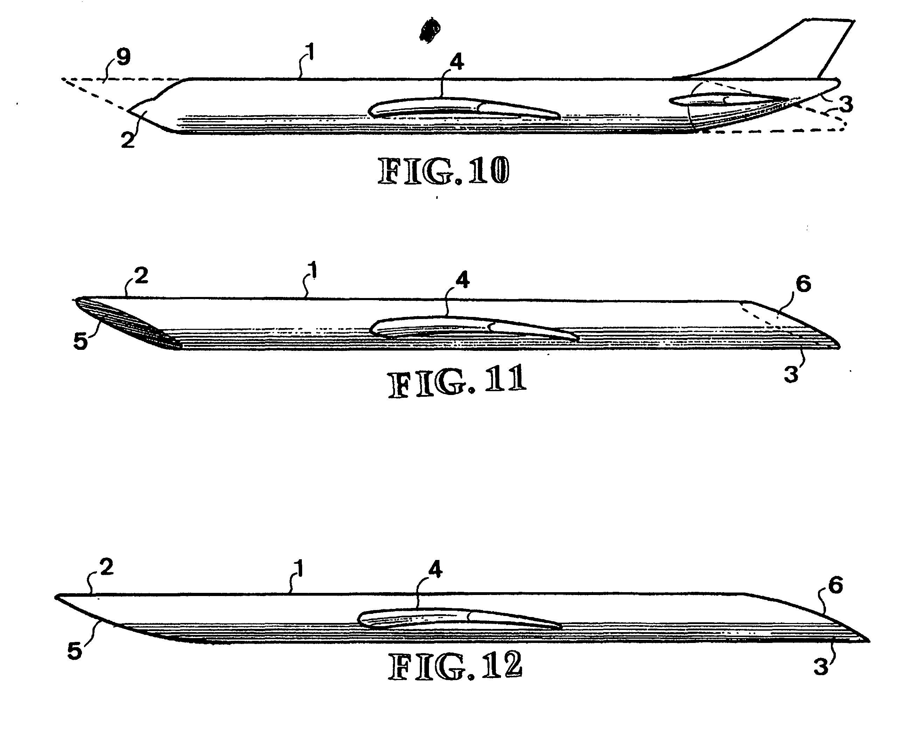

Figure 9 consists of the fuselage 1, the nose 2, the tail 3, the wings 4 and 4', the inclined lateral and frontal surface 7 and the inclined lateral and rear surface 8.

Figure 10 consists of the fuselage 1, the nose 2, the tiltable tail 3, the wing 4 and the tiltable or added modified nose 9.

Figure 11 consists of the fuselage 1, the nose 2, the tail 3, the wing 4, the inclined frontal surface 5 and the inclined rear surface 6.

Figure 12 consists of the fuselage 1, the nose 2, the tail 3, the wing 4, the inclined frontal and slightly convex surface 5 and the rear inclined and slightly convex surface 6.

The unions between the inclined frontal surface and the lower surface of the fuselage and the inclined rear surface and the upper surface of the fuselage can in any case be suitable rounded.

Some drawings do not show the horizontal stabiliser and the fin unit.

## Claims

1. An aircraft or high speed vehicle comprising an elongated fuselage with a flattened and uniform transverse cross-section, to take a form whose side view is a rhomboid with the longer sides horizontal and in which the inclined flat frontal surface is a ramp beginning in front at the top, dropping along and inclined backward until meeting the base, the inclined surface of the tail is parallel to the front surface, that is, with the rear surface beginning at the top, dropping along and inclined backward until meeting the base, having the unions between the other, non-lateral, surfaces suitably rounded.

2. An aircraft or high speed vehicle according to claim 1, wherein said fuselage has a flattened rectangular transverse cross-section.

3. An aircraft or high speed vehicle according to claim 1, wherein said fuselage has an oval transverse cross-section.

4. An aircraft or high speed vehicle according to claim 1, wherein said fuselage has a circular transverse cross-section.

5. An aircraft or high speed vehicle according to claim 1, wherein said fuselage is slightly curved, convex, lengthwise and upward to take a wing-like profile.

6. An aircraft or high speed vehicle according to claim 1, wherein said rectangular fuselage has two sweep-back sides which slope backward and downward to the central longitudinal vertical plane, like the prow of a boat, this design is reversed for the tail.

7. An aircraft or high speed vehicle according to claim 1, wherein the tail cone is tiltable.

8. An aircraft or high speed vehicle according to claim 1, wherein said nose and tail inclined walls are slightly curved.

9. An aircraft or high speed vehicle according to claim 1, wherein the share of said nose is in the form of an oblique cone linked around its base to the vehicle fuselage and iclined so that the upper generatrix of the cone is in line with and forms a continuation of the upper longitudinal axis of said vehicle fuselage.

10. An aircraft or high speed vehicle according to claim 1, wherein the share of said tail is in the form of an oblique cone linked around its base to the vehicle fuselage and inclined so that the lower generatrix of the cone is in line with and forms a continuation of the lower longitudinal axis of said vehicle fuselage.

11. An aircraft or high speed vehicle according to claim 1, wherein the connection between the inclined surfaces, pyramids or cones and the fuselage is smooth, with edges or sharp angles rounded.

## Patentansprüche

1. Flugzeug oder Hochgeschwindigkeitsfahrzeug, das einen im Querschnitt gleichmässigen länglichen Rumpf umfasst und von der Seite gesehen die Form eines Rhomboids mit grösseren waagerechten Seiten annimmt, wobei die geneigte Seite der Frontpartie ein Rampe ist, die oben im vorderen Bereich beginnt und schräg nach hinten bis zum Boden abfällt, und die geneigte Seite der Heckpartie parallel zur vorderen liegt, das heisst, im oberen Bereich beginnt und schräg nach hinten bis zum Boden abfällt, während die Verbindungen zwischen den nicht seitlichen Flächen in zweckmässiger Weise abgerundet sind.

2. Flugzeug oder Hochgeschwindigkeitsfahrzeug nach Anspruch 1, **dadurch gekennzeichnet, dass** der Rumpf einen rechteckigen, flachen Querschnitt aufweist.

3. Flugzeug oder Hochgeschwindigkeitsfahrzeug nach Anspruch 1, **dadurch gekennzeichnet, dass** der Rumpf einen ovalen Querschnitt aufweist.

4. Flugzeug oder Hochgeschwindigkeitsfahrzeug nach Anspruch 1, **dadurch gekennzeichnet, dass** der Rumpf einen kreisförmigen Querschnitt aufweist.

5. Flugzeug oder Hochgeschwindigkeitsfahrzeug nach Anspruch 1, **dadurch gekennzeichnet, dass** der Rumpf in der Länge leicht konvex nach oben geschwungen ist und somit ein flügelähnliches Profil annimmt.

6. Flugzeug oder Hochgeschwindigkeitsfahrzeug nach Anspruch 1, **dadurch gekennzeichnet, dass** es bei rechteckigen Rumpfen eine pfeilförmige Rumpfnase mit zwei nach hinten, in den unteren Bereich der mittleren senkrechten, länglichen geneigten Seiten in der Art eines Schiffsbugs aufweist und diese Anordnung im Heckbereich umgekehrt wird.

7. Flugzeug oder Hochgeschwindigkeitsfahrzeug nach Anspruch 1, **dadurch gekennzeichnet, dass** das Heck geneigt werden kann.

8. Flugzeug oder Hochgeschwindigkeitsfahrzeug nach Anspruch 1, **dadurch gekennzeichnet, dass** die geneigten Wände der Rumpfnase und des Hecks leicht geneigt sind.

9. Flugzeug oder Hochgeschwindigkeitsfahrzeug nach Anspruch 1, **dadurch gekennzeichnet, dass** an der Rumpfnase ein schräger Kegel verwendet wird, der mit seinem unteren Umfang mit Neigung so mit dem Rumpf des Fahrzeugsverbunden wird, dass die obere Generatrix des Kegels auf gleicher Höhe liegt und die Verlängerung der oberen Längslinie des Fahrzeugrumpfes bildet.

10. Flugzeug oder Hochgeschwindigkeitsfahrzeug nach Anspruch 1, **dadurch gekennzeichnet, dass** im Heckbereich ein schräger Kegel verwendet wird, der mit seinem unteren Umfang mit Neigung so mit dem Rumpf des Fahrzeugs verbunden wird, dass die untere Generatrix des Kegels auf gleicher Höhe liegt und die Verlängerung der unteren Längslienie des Fahrzeugrumpfs bildet.

11. Flugzeug oder Hochgeschwindigkeitsfahrzeug nach Anspruch 1, **dadurch gekennzeichnet, dass** die Wände oder kegelförmigen Teile.

## Revendications

1. Avion ou véhicule à grande vitesse qui comprend un fuselage allongé à coupe transversale uniforme, prenant la forme dont la vue latérale est un rhomboïde aux grands côtés horizontaux, dont la face inclinée de la zone frontale est une rampe qui naît sur la partie supérieure avant, descend en inclinaison vers l'arrière jusqu'à rencontrer la base et dont la face inclinée de la queue est parallèle à la face avant, à savoir avec la face postérieure naissant sur la zone supérieure et descendant en inclinaison vers l'arrière jusqu'à rencontrer la base, les raccords entre les superficies non latérales étant dûment arrondies.

2. Avion ou véhicule à grande vitesse selon la revendication 1, **caractérisé en ce que** ce fuselage est à coupe transversale rectangulaire et aplanie.

3. Avion ou véhicule à grande vitesse selon la revendication 1, **caractérisé en ce que** ce fuselage est à coupe transversale ovale.

4. Avion ou véhicule à grande vitesse selon la revendication 1, **caractérisé en ce que** ce fuselage est à coupe transversale circulaire.

5. Avion ou véhicule à grande vitesse selon la revendication 1, **caractérisé en ce que** ce fuselage est légèrement cintré longitudinalement et convexe vers le haut; de sorte à adopter un profil similaire à celui d'une aile.

6. Avion ou véhicule à grande vitesse selon la revendication 1, **caractérisé en ce que** sur des fuselages rectangulaires, il présente un nez en flèche ayant deux faces latérales inclinées vers l'arrière et vers la zone inférieure du plan vertical central et longitudinal, comme l'avant d'un bateau, cette disposition étant inversée sur la queue.

7. Avion ou véhicule à grande vitesse selon la revendication 1, **caractérisé en ce que** la queue est inclinable.

8. Avion ou véhicule à grande vitesse selon la revendication 1, **caractérisé en ce que** les parois de ce nez et de la queue sont légèrement inclinées.

9. Avion ou véhicule à grande vitesse selon la revendication 1, **caractérisé en ce qu'**il utilise sur le nez un cône oblique raccordé par le contour de sa base au fuselage du véhicule suivant une inclinaison permettant à la génératrice supérieure du cône d'être alignée avec et d'être le prolongement de la ligne longitudinale supérieure du fuselage du véhicule.

10. Avion ou véhicule à grande vitesse selon la revendication 1, **caractérisé en ce qu'**il utilise sur la queue un cône oblique raccordé par le contour de ses bases au fuselage du véhicule suivant une inclinaison permettant à la génératrice inférieure du cône d'être alignée avec et d'être le prolongement de la ligne longitudinale inférieure du fuselage du véhicule.

11. Avion ou véhicule à grande vitesse selon la revendication 1, **caractérisé en ce que** les parois ou éléments coniques
